# EUROPEAN PATENT SPECIFICATION

(11) **EP 3 214 328 B1**
(45) Date of publication and mention of the grant of the patent: **26.09.2018**
(21) Application number: 15856093.8
(22) Date of filing: 28.10.2015
(51) Int. Cl.: F16C 33/66, C10M 159/06, F16C 37/00, F16N 11/00, F16N 39/02, C10N 30/00, C10N 40/02, C10N 50/10, C10M 159/00

(54) **SPINDLE DEVICE FOR MACHINE TOOL MAIN SHAFT**
SPINDELVORRICHTUNG FÜR WERKZEUGMASCHINENHAUPTWELLE
DISPOSITIF DE BROCHE POUR L'AXE PRINCIPAL D'UNE MACHINE-OUTIL

(30) Priority: 29.10.2014 JP 2014220693; 29.09.2015 JP 2015191193
(43) Date of publication of application: 06.09.2017
(73) Proprietor: NSK Ltd., Tokyo 141-8560 (JP)
(72) Inventor: NAKAMURA, Shinya, Fujisawa-shi, Kanagawa 252-0811 (JP); INAGAKI, Yoshifumi, Fujisawa-shi, Kanagawa 252-0811 (JP)
(74) Representative: Grünecker Patent- und Rechtsanwälte PartG mbB
(86) International application number: PCT/JP2015/080455
(87) International publication number: WO 2016/068212

(56) References cited:
- EP-A1- 2 236 592
- JP-A- H1 193 957
- JP-A- H1 193 957
- JP-A- H11 141 559
- JP-A- S55 152 921
- JP-U- H0 326 829
- JP-U- H0 499 500
- US-A- 4 137 997
- US-A1- 2007 189 650
- US-A1- 2009 258 802
- DATABASE WPI Week 200503 Thomson Scientific, London, GB; AN 2005-026933 XP002771639, -& JP 2004 360828 A (NTN CORP) 24 December 2004 (2004-12-24)

## Description

### TECHNICAL FIELD

The present invention relates to a spindle device that intermittently or continuously supplies a predetermined amount of lubricant to a rolling bearing for supporting a main shaft.

### BACKGROUND ART

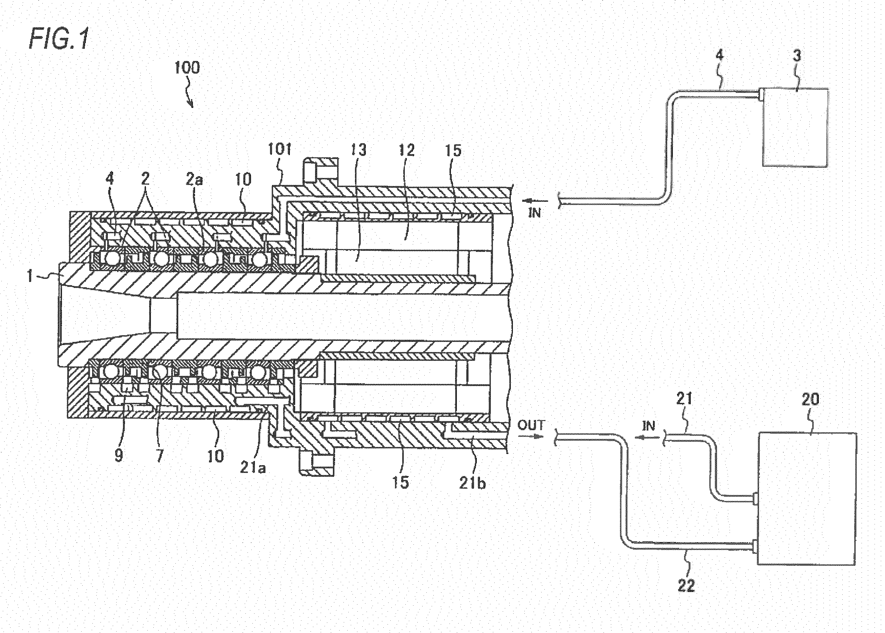

In a spindle for a machine tool main shaft as illustrated in Fig. 1, a main shaft is rotatably supported by a rolling bearing 2 inside a housing 101. For example, as disclosed in Patent Document 1, a spindle device is widely used in which a certain amount of grease composition is periodically supplied from a lubricant supply device 3 to the rolling bearing 2 through a supply pipe 4 to maintain lubrication of the rolling bearing 2 for a long period.

However, since the amount of grease composition supplied to the rolling bearing 2 is extremely small, it is considerably difficult to stably supply a small amount of relatively hard grease composition having a low worked penetration to the rolling bearing 2 due to pipe resistance in a case where a pipe route of the supply pipe 4 is long or several portions are curved or bent at right angles in the middle of the supply pipe. In addition, when the grease composition is used for a long period, a thickener separates from a base oil by pressure repeatedly applied at the time of force feeding, and thus the grease is hardened or solidified as a whole, whereby the inside of the pipe is clogged, and it becomes more difficult to stably supply a certain amount of grease composition.

### PRIOR ART DOCUMENT

### PATENT DOCUMENT

Patent Document 1: JP-B-4 051 563
Patent Document 2: US 4,137,997
Patent Document 3: JP H 1193957

### SUMMARY OF THE INVENTION

### PROBLEMS TO BE SOLVED BY THE INVENTION

Accordingly, an object of the present invention is to provide a spindle device having a long service life which is free from problems as in a grease composition that a thickener is hardened or solidified by separating from a base oil to clog the inside of a pipe, and stably supplies lubricant from a lubricant supply device to a rolling bearing.

### MEANS FOR SOLVING THE PROBLEM

In order to solve the above-described problems, the present invention provides a spindle device and a spindle for a machine tool main shaft.
(1) A spindle device including: a rolling bearing; a main shaft that is rotatably supported by the rolling bearing, the rolling bearing and the main shaft are provided inside a housing; and a lubricant supply device that intermittently or continuously supplies a predetermined amount of lubricant to the rolling bearing through a supply pipe, wherein the lubricant contains lubricating oil and wax, wherein based on a liquefaction point which is a predetermined temperature within a temperature range of 10°C to 70°C, the lubricant is changeable between a liquid state at a temperature exceeding the liquefaction point and a semi-solid state at a temperature equal to or lower than the liquefaction point; and wherein the lubricant is transported in a semi-solid state through the supply pipe from the lubricant supply device, changes into a liquid state immediately before the rolling bearing, and flows into the bearing.
(2) The spindle device according to (1), wherein a cooling mechanism is installed on at least one of an outer side of an outer ring of the rolling bearing and an outer side of the main shaft to cool the rolling bearing, and wherein the supply pipe is provided adjacently to the cooling mechanism, so that the lubricant is transported while being maintained in the semi-solid state until immediately before flowing into the rolling bearing.
(3) The spindle device according to (1) or (2), wherein the lubricant is reversibly changeable between the liquid state and the semi-solid state based on the liquefaction point.
(4) The spindle device according to any one of (1) to (3), further including a receiving portion that receives the lubricant of the liquid state discharged from an inside of the bearing after completion of lubrication.
(5) The spindle device according to (4), wherein the lubricant received in the receiving portion changes into a semi-solid state by being cooled and is then collected in the lubricant supply device.

The term "lubricant" referred to in claim 1 means lubricant containing lubricating oil and wax, and the term "liquefaction point" means a temperature at which the wax-containing lubricant changes from a semi-solid state to a liquid state or from a liquid state to a semi-solid state. Further, the term "liquefaction point" follows, for example, "Rules for Regulations on Hazardous Substances in Japan", Chapter 12, Miscellaneous Provision 69-2 (liquid definition). In the following description, the lubricant is referred to as "wax-containing lubricant".

### EFFECTS OF THE INVENTION

Since the wax-containing lubricant used in the present invention does not contain a thickener, there is no trouble that the thickener solidifies and thus the wax-containing lubricant is hindered from being supplied to the rolling bearing from the lubricant supply device. Therefore, in the spindle device of the present invention, the wax-containing lubricant is stably supplied for a long period compared to the grease supply method. Thereby, it is possible to provide the spindle device having a long service life.

### BRIEF DESCRIPTION OF THE DRAWINGS

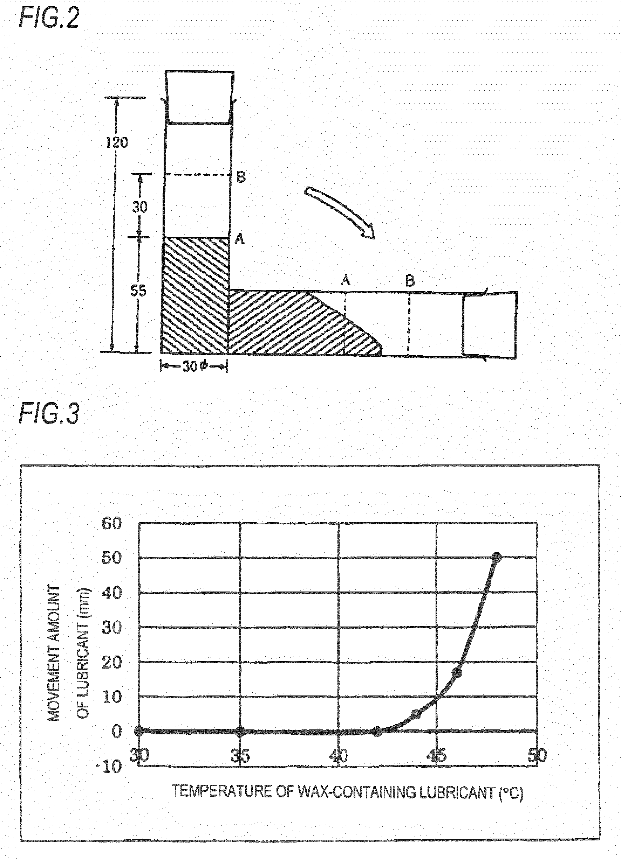

Fig. 1 is a schematic view illustrating an example of a spindle device.Fig. 2 is a diagram for explaining a liquefaction point.Fig. 3 is a graph illustrating a result obtained by measurement of a temperature change according to a moving amount of wax-containing lubricant in a viscometer prepared in Example.

The present invention will be described in detail below.

A spindle device 100 according to the present invention may have the same structure as a spindle device of a conventional grease supply method, but is
characterized in that it supplies wax-containing lubricant in place of a grease composition and lubricates bearings. For example, as illustrated in Fig. 1, the spindle device 100 is configured such that a main shaft 1 is supported by a plurality of rolling bearings 2 and 2 inside a housing 101. In addition, a lubricant supply device 3 installed outside the housing 101 intermittently or continuously supplies a predetermined amount of wax-containing lubricant in place of the grease composition to each of the rolling bearings 2 through a supply pipe 4. The above configuration is called a basic structure of the spindle device 100. In this spindle device 100, the supply pipe 4 branches, a tip thereof is connected to a supply port provided in outer rings 2a of the respective rolling bearings 2, and thus the wax-containing lubricant is uniformly supplied to the respective rolling bearings 2.

The wax-containing lubricant contains lubricating oil and wax as a basic component. The wax solidifies or semi-solidifies at a temperature lower than its melting point, and becomes a liquid state and has fluidity at a temperature higher than the melting point. In this way, when the wax is a single body, the wax reversibly changes to a semi-solid state and a liquid state as a whole at a temperature near the melting point of the wax. In contrast, the wax-containing lubricant of the present invention is a mixture (corresponding to a dilute solution obtained by addition of lubricating oil (dilute liquid) to wax (solute)) of lubricating oil (liquid) and wax (semi-solid). Therefore, the wax-containing lubricant changes from a semi-solid state to a liquid state at a temperature lower than the melting point of the wax.

The temperature (hereinafter, referred to as a "liquefaction point") at which the semi-solid state changes to the liquid state is closely related to the melting point and a mixing ratio with the lubricating oil of the contained wax. That is, from the relation of the "melting point of the wax > liquefaction point", a liquefaction temperature can be controlled to a predetermined temperature equal to or lower than the melting point of the wax by the mixing ratio between the contained wax and the lubricating oil. Specifically, a temperature difference between the liquefaction point and the melting point of the wax can be brought to about 10°C to 30°C depending on the type of the lubricating oil and the wax and the mixing ratio therebetween. By adjustment of the type and the mixing ratio with the lubricating oil of the contained wax, it is also possible to reversibly change into the liquid state and the semi-solid state depending on the temperature.

That is, the wax-containing lubricant of the present invention contains the lubricating oil and the wax as a basic component, and it is sufficient that the wax-containing lubricant can change between the liquid state at a temperature exceeding the liquefaction point which is a predetermined temperature within a temperature range of 10°C to 70°C and the semi-solid state at a temperature equal to or lower than the liquefaction point. Preferably, the wax-containing lubricant is adjusted to reversibly change between the liquid state and the semi-solidified state based on the liquefaction point.

As long as having such properties, neither lubricating oil nor wax is limited. As the lubricating oil, various types of lubricating oil used for lubricating bearings from the past can be used, mineral oil such as paraffinic mineral oil or naphthenic mineral oil or synthetic oil such as ester synthetic oil, hydrocarbon synthetic oil, or ether synthetic oil can be used, and a mixture of plural kinds can also be used. In addition, although viscosity of the lubricating oil may be within a general range, kinematic viscosity at 40°C is 5 to 200 mm²/s in consideration of lubricity of the rolling bearing 2 and is preferably 10 to 130 mm²/s (40°C) so as to satisfy both low temperature rise characteristics and seizure resistance. On the other hand, the wax may be either natural wax or synthetic wax, and preferably has high compatibility with the lubricating oil. An example of the natural wax may include animal/vegetable wax, mineral wax, or petroleum wax, and an example of the synthetic wax may include Fischer Tropsch wax, polyethylene wax, oil-based synthetic wax (esters, ketones, or amides), or hydrogenated wax, and may also include a mixture of plural kinds. However, since the temperature at which the liquid state and the semi-solid state of the wax-containing lubricant reversibly change is substantially determined by the melting point of the wax, the wax is selected from the example exemplified above in order to make the liquefaction point to be 10 to 70°C, and the lubricating oil and the wax are prepared at an appropriate mixing ratio.

In addition, the mixing ratio between the lubricating oil and the wax is preferred that the content of the wax is 10 to 40 mass% and the content of the lubricating oil is 90 to 60 mass% with respect to the total amount of the lubricating oil and the wax. As the mixing ratio of the wax becomes larger, the fluidity becomes worse when the wax-containing lubricant is in the semi-solid state; when the mixing ratio of the wax exceeds 40 mass%, a discharge property of the lubricant supply device 3 or transportability of the supply pipe 4 becomes worse, and transportability is also further worse when the lubricant is discharged after lubrication to be described below. Particularly, in a case where the fluidity is emphasized, preferably, the mixing ratio of the wax is set to be from 10 mass% to less than 20 mass% and the mixing ratio of the lubricating oil is set to be from more than 80 mass% to 90 mass%. The wax is added as an oiliness improver for lubricating oil or grease. In the wax-containing lubricant, however, the wax is added larger than the amount of general additives as described above to hold semi-solid properties (function as a thickener) equivalent to the grease.

For example, microcrystalline wax has a melting point of 67°C to 98°C, but wax-containing lubricant mixed with the lubricating oil at the above mixing ratio has a liquefaction point which can be set to a predetermined temperature in the range of 35°C to 50°C. Although the paraffin wax has a melting point of 47°C to 69°C, wax-containing lubricant mixed with the lubricating oil at the above mixing ratio has a liquefaction point which can be set to a predetermined temperature in the range of 20°C to 35°C.

Further, various additives can be added to the wax-containing lubricant depending on the purpose. For example, any known oxidation inhibitor, a rust inhibitor, or an extreme pressure agent can be added in an appropriate amount.

The wax-containing lubricant may be prepared in such a manner that the wax is heated to a temperature equal to or higher than the melting point to make it into a liquid state, the lubricating oil or the lubricating oil added with additives is added to the wax and sufficiently mixed with each other, and then the mixture is cooled to a temperature (usually, about a temperature equal to or lower than the liquefaction point) lower than the melting point of the wax. Alternatively, the wax-containing lubricant may be prepared in such a manner that the lubricating oil or the lubricating oil added with additives is placed with solid wax in a suitable container, heated to a temperature equal to or higher than the melting point of the wax, and mixed with each other, and then the mixture is cooled to a temperature equal to or lower than the liquefaction point.

In addition, the wax-containing lubricant has characteristics in that a thickener is not contained therein like grease G and solidification does not occur even when a certain pressure is applied.

The lubricant supply device 3 stores the wax-containing lubricant in a semi-solid state without heating, and discharges a certain amount of wax-containing lubricant in the semi-solid state to the supply pipe 4. However, both the lubricating oil and the wax forming the wax-containing lubricant are lubricating components, the wax-containing lubricant is in the semi-solid state, and thus the wax-containing lubricant can flow through the supply pipe 4 even in the semi-solid state using the existing lubricant supply device for the grease composition.

In order to supply the wax-containing lubricant from the lubricant supply device 3 to the inside of the rolling bearing 2, it is necessary to flow the wax-containing lubricant of the liquid state through the supply port provided in the outer ring 2a of the rolling bearing 2. As described above, the wax-containing lubricant supplied from the lubricant supply device 3 flows in the semi-solid state through the inside of the supply pipe 4. However, the rolling bearing 2 is at a high temperature during operation of the spindle device 100, the liquefaction point is set to be 10°C to 70°C as described above, and thus the proximity of the tip of the supply pipe 4 connected to the supply port of the outer ring 2a is in a state sufficiently higher than the liquefaction point, whereby the wax-containing lubricant changes into a liquid state when passing through this portion and easily flows into the bearing.

In the inside of the rolling bearing 2, the wax-containing lubricant is in the liquid state. However, since the wax-containing lubricant contains no thickener and both of the lubricating oil and the wax are lubricating components, the wax-containing lubricant is in a state similar to that in which the proportion of the base oil in the grease composition is increased, and lubricating performance of the wax-containing lubricant is higher than that of the grease composition. Therefore, the amount of replenishment at one time can be reduced, and an interval of replenishment becomes also long. Thus, consumption of the wax-containing lubricant can be reduced, the number of replenishment times to the lubricant supply device 3 becomes smaller, and an operation cost of the spindle device 100 can be lowered.

In a ball bearing, as a ball rotates along a contact angle line as an equator, the ball exhibits a pump effect, and an air flow is generated in a space in which the lubricant is enclosed. For this reason, when the wax-containing lubricant having good fluidity is used, it is possible to prevent the lubricant from staying in the bearing and to prevent a temperature rise of the bearing.

After completion of the lubrication, the wax-containing lubricant is discharged to a lubricant storage groove (receiving portion) 9 provided on a side of the rolling bearing 2 by centrifugal force due to rotation of a spacer 7. Since the lubricant storage groove 9 is located outside the rolling bearing 2, a temperature thereof is lower than that of the inside of the bearing. The discharged wax-containing lubricant changes into a semi-solid state again due to a reversible change type. The wax-containing lubricant changed into the semi-solid state is sent to the outside of the housing 101, and is collected into the lubricant supply device 3. In the grease composition, residues derived from the thicker by use for a long period is generated in the lubricant storage groove 9, thereby blocking the flow of air, and this is a cause of a temperature rise of the bearing. However, this problem does not occur in the wax-containing lubricant because the wax-containing lubricant is discharged in the liquid state to a certain distance even after being discharged from the rolling bearing 2.

Various modifications are possible for the spindle device 100. For example, preferably, a cooling pipe 10 is spirally provided outside each of the outer rings 2a in the housing 101 to circulate a coolant, so that the bearing is cooled to a temperature of about 40 to 50°C at the time of the operation to prevent the seizure of the rolling bearing 2. Further, since a temperature of the main shaft 1 also increases due to the rolling bearing 2 or heat generation of a stator 12 and a rotor 13 of a motor and rotation accuracy may be reduced due to thermal expansion, preferably, a cooling pipe 15 is spirally provided outside the rotor 13 to perform circulation and cooling of the coolant. The rolling bearing 2 and the main shaft 1 are cooled in such a manner that a supply pipe 21 connected from a coolant supply device 20 installed outside the housing 101 branches into a supply pipe 21a for cooling the bearing and a supply pipe 21b for cooling the main shaft in the housing 101, a coolant is supplied to each of the supply pipes to circulate through the supply pipes 21a and 21b, and then the coolant flows back to the coolant supply device 20 through a discharge pipe 22. A cooling mechanism for the rolling bearing and a cooling mechanism for the main shaft may be separately provided.

At that time, the wax-containing lubricant has a different liquefaction point depending on a composition thereof, but various types of wax-containing lubricant can be transported through the supply pipe 4 in a semi-solid state by piping of the supply pipe 4 connected from the lubricant supply device 3 in the vicinity of the cooling pipes 10 and 15 and control of a cooling temperature of the cooling pipes 10 and 15. In addition, a temperature of the lubricant storage groove 9 can also be adjusted by the cooling temperature of the cooling pipes 10 and 15, and various types of wax-containing lubricant can be discharged in a semi-solid state after lubrication.

Basically, in view of an environmental temperature around the bearing or an operating temperature of the bearing, the liquefaction point is suitably 10°C to 70°C in general. However, in a case of the application to a rolling bearing for a machine tool (for example, a rolling bearing for a machine tool main shaft or a rolling bearing for supporting a ball screw shaft end), the liquefaction point is preferably 30°C to 70°C and more preferably 40°C to 70°C, for the reasons described below.

In order to ensure machining accuracy of a workpiece by minimizing thermal displacement of members due to the change of an ambient temperature, a surrounding environmental condition of the machine tool to be used is kept in air-conditioning management at about 20°C to 25°C in many cases. Accordingly, when a lower limit of the liquefaction point is set to 30°C, the machine tool is at a temperature equal to or lower than the liquefaction point in a stop state, the wax-containing lubricant is kept in the inside of the bearing or an oil storage portion without being liquefied. Even when the bearing or the spindle, in which the wax-containing lubricant is stored, is stopped or is stocked and stored in a stop state, the wax-containing lubricant is held in the inside and the periphery of the bearing without being liquefied, and thus a lubrication function is not impaired for a long period unlike ordinary grease. Therefore, the liquefaction point is preferably set to 30°C to 70°C.

In addition, since an internal temperature of the bearing to be used for the machine tool rises as the rotational number increases, it is necessary to supply more lubricating oil to a rolling contact surface in order to maintain a proper lubrication state. In a continuous operation in normal rotation conditions (low-speed rotation range to medium-speed rotation range) or in a case of an operating condition in which low-speed rotation and maximum-speed rotation are alternately repeated, the temperature of the bearing is roughly 40°C or lower, and the lubricant around the rolling contact surface is sufficient for the amount of lubricating oil.

However, in a case of a continuous machining at maximum-speed rotation or a continuous heavy cutting at a low rotational speed, the temperature of the bearing may exceed 40°C. In this case, only the lubricating oil existing in the bearing space may be insufficient for the lubricating oil on the rolling contact surface. For this reason, the lower limit of the liquefaction point is set to 40°C; when the temperature of the bearing exceeds 40°C, the wax-containing lubricant around the bearing is liquefied to replenish the lubricating oil insufficient for the rolling contact surface, and thus it is possible to prevent trouble such as unexpected seizing in advance. As a result, excessive lubricant is not consumed in the low/medium-speed rotation range, and lubrication life can be further improved. Accordingly, the liquefaction point is more preferably set to 40°C to 70°C at the time of use for the machine tool.

### EXAMPLES

Assuming a general spindle device, wax-containing lubricant was prepared, the wax-containing lubricant having a feature that a semi-solid state changes into a liquid state at around 47°C. That is, the wax-containing lubricant was obtained by mixing 78.5 mass% of diester oil (dioctyl sebacate), 15 mass% of microcrystalline wax (melting point: 82°C), and 6.5 mass% of a mixture containing an oxidation inhibitor and an extreme pressure agent as an additive with each other at a temperature equal to or higher than the melting point of the microcrystalline wax and naturally cooling it to a room temperature.

The temperature (liquefaction point) at which thesemi-solid state changes to the liquid state was confirmed by the following methods as illustrated in Fig. 2. These methods follows "Rules for Regulations on Hazardous Substances in Japan", Chapter 12, Miscellaneous Provision 69-2 (liquid definition).
(1) Fill a test object (wax-containing lubricant) in two test tubes (diameter of 30 mm and height of 120 mm) up to a line A (height of 55 mm).
(2) Seal one test tube (test tube for liquid-state determination) with a rubber stopper not having holes.
(3) Seal the other test tube (test tube for temperature measurement) with a rubber stopper equipped with a thermometer. Herein, a tip of the thermometer is inserted up to a depth of 30 mm from a surface of the test object and is erected with respect to the test tube.
(4) Place two test tubes in a constant-temperature water bath maintained at a liquid-state confirmation temperature ± 0.1°C while erecting the two test tubes such that a line B (30 mm above from the surface of the test object) thereof sinks under a water surface in the constant-temperature water bath.
(5) Keep a state as it is for 10 minutes after the temperature of the test object in the test tube for temperature measurement reaches the liquid-state confirmation temperature ± 0.1°C.
(6) Remove the test tube for liquid-state determination in the erected state on a horizontal table from the constant-temperature water bath, tilt immediately it on the table in a horizontal direction, and measure a time until the tip of the test object reaches the line B of the test tube.
(7) Determine that the test object is in a "liquid state" when the time until the test object reaches the line B is within 90 seconds.
(8) Perform (1) to (7) by variously changing the temperature of the constant-temperature water bath, and define a temperature at which the test object is in the liquid state as a "liquefaction point".

The liquefaction point is defined and digitized within a range of about ± 2°C with respect to a certain specific temperature rather than a fixed point temperature such as a freezing point of water (0°/pure water, under atmospheric pressure).

For this wax-containing lubricant, when viscosity was measured by changing the temperature, as illustrated in Fig. 3, there was no movement of the sample surface up to 42°C, a movement of 5 mm at 44°C and 17 mm at 46°C was confirmed, and the wax-containing lubricant reached the tip of the container exceeding 50 mm at 48°C. Thus, it can be seen that the wax-containing lubricant begins to change from the semi-solid state to the liquid state at around 47°C.

Then, when the wax-containing lubricant was stored in a semi-solid state in the lubricant supply device of the general spindle device as illustrated in Fig. 1 and was continuously supplied to the rolling bearing with a fixed quantity at stated intervals, the wax-containing lubricant could be stably supplied to the rolling bearing without clogging of the supply pipe or the discharge pipe.

### DESCRIPTION OF REFERENCE NUMERALS

1: Main shaft
2: Rolling bearing
3: Lubricant supply device
4: Supply pipe
7: Spacer
9: Lubricant storage groove
10, 15: Cooling pipe
12: Stator
13: Rotor
20: Coolant supply device
21: Supply pipe
22: Discharge pipe
100: Spindle device
101: Housing

## Claims

1. A spindle device comprising:
a rolling bearing;
a main shaft that is rotatably supported by the rolling bearing, the rolling bearing and the main shaft being provided inside a housing; and
a lubricant supply device that intermittently or continuously supplies a predetermined amount of lubricant to the rolling bearing through a supply pipe, **characterized in that** the lubricant contains lubricating oil and wax,
that based on a liquefaction point which is a predetermined temperature within a temperature range of 10°C to 70°C, the lubricant is changeable between a liquid state at a temperature exceeding the liquefaction point and a semi-solid state at a temperature equal to or lower than the liquefaction point, wherein the liquefaction point is measured according to Chapter 12, Misc. Provision 69-2 of the Rules for Regulations of Hazardous Substances in Japan,
and
that the lubricant is transported in a semi-solid state through the supply pipe from the lubricant supply device, changes into a liquid state immediately before the rolling bearing, and flows into the bearing.

2. The spindle device according to claim 1, **characterized in that** a cooling mechanism is installed on at least one of an outer side of an outer ring of the rolling bearing and an outer side of the main shaft to cool the rolling bearing, and
that the supply pipe is provided adjacently to the cooling mechanism, so that the lubricant is transported while being maintained in the semi-solid state until immediately before flowing into the rolling bearing.

3. The spindle device according to claim 1 or 2, **characterized in that** the lubricant is reversibly changeable between the liquid state and the semi-solid state based on the liquefaction point.

4. The spindle device according to any one of claims 1 to 3, **characterized by** a receiving portion that receives the lubricant of the liquid state discharged from an inside of the bearing after completion of lubrication.

5. The spindle device according to claim 4, **characterized in that** the lubricant received in the receiving portion changes into a semi-solid state by being cooled and is then collected in the lubricant supply device.

## Patentansprüche

1. Spindelvorrichtung, umfassend:
ein Rolllager,
eine Hauptwelle, die drehbar durch das Rolllager gehalten wird, wobei das Rolllager und die Hauptwelle in einem Gehäuse vorgesehen sind, und
eine Schmiermittel-Zuführeinrichtung, die intermittierend oder kontinuierlich eine vorbestimmte Menge an Schmiermittel durch ein Zuführrohr zu dem Rolllager zuführt,
**dadurch gekennzeichnet, dass**:
das Schmiermittel Schmieröl und Wachs enthält,
basierend auf einem Verflüssigungspunkt, der eine vorbestimmte Temperatur innerhalb eines Temperaturbereichs von 10°C bis 70°C ist, das Schmiermittel zwischen einem flüssigen Zustand bei einer Temperatur über dem Verflüssigungspunkt und einem halbfesten Zustand bei einer Temperatur gleich oder unter dem Verflüssigungspunkt wechseln kann, wobei der Verflüssigungspunkt gemäß Kapitel 12 et al. der Vorkehrung 69-2 der Regeln für die Handhabung von gefährlichen Substanzen in Japan gemessen wird, und
das Schmiermittel in einem halbfesten Zustand durch das Zuführrohr von der Schmiermittel-Zuführvorrichtung transportiert wird, unmittelbar vor dem Rolllager zu einem flüssigen Zustand wechselt und in das Lager fließt.

2. Spindelvorrichtung nach Anspruch 1, **dadurch gekennzeichnet, dass** ein Kühlmechanismus an einer Außenseite eines Außenrings des Rolllagers und/oder an einer Außenseite der Hauptwelle installiert ist, um das Rolllager zu kühlen, und dass das Zuführrohr in Nachbarschaft zu dem Kühlmechanismus vorgesehen ist, sodass das Schmiermittel in dem halbfesten Zustand transportiert wird bis unmittelbar bevor es in das Rolllager fließt.

3. Spindelvorrichtung nach Anspruch 1 oder 2, **dadurch gekennzeichnet, dass** das Schmiermittel reversibel zwischen dem flüssigen Zustand und dem halbfesten Zustand basierend auf dem Verflüssigungspunkt wechseln kann.

4. Spindelvorrichtung nach einem der Ansprüche 1 bis 3, **gekennzeichnet durch** einen Empfangsteil, der das nach dem erfolgten Schmieren von innerhalb des Lagers ausgeführte Schmiermittel in dem flüssigen Zustand empfängt.

5. Spindelvorrichtung nach Anspruch 4, **dadurch gekennzeichnet, dass** das in dem Empfangsteil empfangene Schmiermittel zu einem halbfesten Zustand wechselt, indem es gekühlt wird, und dann in der Schmiermittel-Zuführeinrichtung gesammelt wird.

## Revendications

1. Dispositif à broche comprenant :
un roulement à billes,
un arbre principal qui est supporté par le roulement à billes tout en pouvant tourner, le roulement à billes et l'arbre principal étant prévus à l'intérieur d'une enveloppe, et
un dispositif de délivrance de lubrifiant qui délivre de façon intermittente ou continue une quantité prédéterminée de lubrifiant au roulement à billes par l'intermédiaire d'un tuyau d'alimentation, **caractérisé**
**en ce que** le lubrifiant contient de l'huile de lubrification et de la paraffine,
**en ce que**, sur la base du point de liquéfaction qui représente une température prédéterminée dans la plage de températures allant de 10 °C à 70 °C, le lubrifiant peut changer entre un état liquide à une température dépassant le point de liquéfaction et un état à demi solide à une température inférieure ou égale à celle du point de liquéfaction, le point de liquéfaction étant mesuré en fonction du chapitre 12, dispositions diverses 69-2 des règles concernant les réglementations sur les substances dangereuses au Japon, et
**en ce que** le lubrifiant est transporté dans un état à demi solide au travers du tuyau d'alimentation depuis le dispositif de délivrance de lubrifiant, se change pour l'état liquide immédiatement avant le roulement à billes et circule dans le roulement.

2. Dispositif à broche selon la revendication 1, **caractérisé en ce qu'un** mécanisme de refroidissement est installé sur au moins l'un d'un côté externe d'une bague externe du roulement à billes et d'un côté externe de l'arbre principal dans le but de refroidir le roulement à billes, et
**en ce que** le tuyau d'alimentation est prévu pour être adjacent au mécanisme de refroidissement de sorte à ce que le lubrifiant soit transporté tout en étant maintenu à l'état à demi solide jusqu'à ce qu'il se retrouve immédiatement avant de circuler dans le roulement à billes.

3. Dispositif à broche selon la revendication 1 ou la revendication 2, **caractérisé en ce que** le lubrifiant peut changer de façon réversible entre l'état liquide et l'état à demi solide sur la base du point de liquéfaction.

4. Dispositif à broche selon l'une quelconque des revendications 1 à 3, **caractérisé par** un organe de réception qui reçoit le lubrifiant de l'état liquide éjecté de l'intérieur du roulement après une lubrification complète.

5. Dispositif à broche selon la revendication 4, **caractérisé en ce que** le lubrifiant reçu dans l'organe de réception passe à l'état à demi solide en étant refroidi puis est recueilli dans le dispositif de délivrance de lubrifiant.
